# FASCICULE DE BREVET EUROPEEN

(11) **EP 3 925 824 B1**
(45) Date de publication et mention de la délivrance du brevet: **23.08.2023**
(21) Numéro de dépôt: 21179923.4
(22) Date de dépôt: 17.06.2021
(51) Int. Cl.: B60N 3/02, B61D 27/00, B61D 37/00, B60H 1/00

(54) **BARRE DE PRÉHENSION, CAISSE DE VÉHICULE COMPRENANT UNE TELLE BARRE ET VÉHICULE COMPRENANT UNE TELLE CAISSE**
GRIFFSTANGE, WAGENKASTEN, DER EINE SOLCHE STANGE UMFASST, UND FAHRZEUG, DAS EINEN SOLCHEN WAGENKASTEN UMFASST
GRIPPING BAR, VEHICLE BODY COMPRISING SUCH A BAR AND VEHICLE COMPRISING SUCH A BODY

(30) Priorité: 19.06.2020 FR 2006460
(43) Date de publication de la demande: 22.12.2021
(73) Titulaire: ALSTOM Transport Technologies, 93400 Saint-Ouen (FR)
(72) Inventeur: BISTAGNINO, Andrea, 93482 SAINT OUEN (FR); KELLEY, Benjamin, 93482 SAINT OUEN (FR); DEMILLY, Charles, 93482 SAINT OUEN (FR)
(74) Mandataire: Lavoix

(56) Documents cités:
- EP-A1- 3 378 685
- JP-A- 2010 064 555

## Description

La présente invention concerne une barre de préhension, une caisse de véhicule comprenant une telle barre et un véhicule comprenant une telle caisse.

Dans le domaine des véhicules de transport de passagers, un véhicule comprend généralement une caisse qui délimite un compartiment d'accueil des passagers et ce compartiment est généralement climatisé afin d'offrir un certain niveau de confort aux passagers.

Certaines parties de la caisse donnant sur l'extérieur, telles que le plafond ou le plancher, comportent peu ou pas d'isolation thermique et sont plus susceptibles de transmettre les variations de températures de l'extérieur, ce qui dégrade le confort perçu par les passagers. Par exemple, en hiver l'air froid, plus dense que l'air réchauffé, tend à stagner au voisinage du plancher suivant un phénomène de stratification.

Il est connu d'augmenter la puissance de ventilation des équipements de climatisation existants pour dé-stratifier l'air du compartiment. Cependant, cette approche génère des flux d'air intenses au sein du compartiment, qui nuisent au confort des passagers.

DE-3430031-A1 décrit un dispositif de ventilation installé dans une pièce d'immeuble. Ce système demande d'importants travaux d'installation et réduit la surface disponible du plancher.

JP-2010-064555-A décrit une poignée, fixée au dossier d'un siège passager et intégrant un dispositif de ventilation pour se sécher les mains.

EP-3378685-A1 décrit une barre de préhension de l'état de l'art qui forme la base du préambule de la revendication 1.

C'est à ces problèmes qu'entend plus particulièrement remédier l'invention, en proposant une barre de préhension qui contribue au confort thermique dans le compartiment d'accueil des passagers.

À cet effet, l'invention concerne une barre de préhension pour caisse de véhicule de transport de passagers, notamment de véhicule ferroviaire, la barre de préhension comprenant un corps de forme allongée, définissant un axe longitudinal de la barre de préhension, avec une portion centrale située entre deux portions d'extrémité. Selon l'invention, le corps comprend une paroi présentant une surface externe et délimitant un conduit de ventilation, le conduit de ventilation débouchant de chacune des portions d'extrémité par un évent respectif. La barre de préhension comprend un organe moteur de ventilation, qui est logé dans le conduit de ventilation au niveau de la portion centrale et qui est configuré pour aspirer de l'air au niveau de l'un des deux évents et souffler cet air au niveau de l'autre évent. La barre de préhension est destinée à être disposée au sein d'un compartiment d'accueil de passagers de la caisse de véhicule, les deux portions d'extrémité étant destinées à être fixées à la caisse respectivement au voisinage d'un plafond et au voisinage d'un plancher de la caisse, la surface externe du corps étant configurée pour être saisie par les passagers.

Grâce à l'invention, les passagers peuvent se tenir à la barre de préhension, qui joue à la fois le rôle de main courante traditionnelle et celui de dispositif de ventilation. Le dispositif de ventilation intégré à la barre de préhension selon l'invention ne réduit pas l'espace disponible au sein du compartiment. En hiver, l'air plus chaud, aspiré au niveau du plafond, est soufflé au niveau du plancher, sans générer de flux d'air désagréable pour les passagers. En été, l'air plus frais, aspiré au niveau du plancher, est soufflé au niveau du plafond, sans générer de flux d'air désagréable pour les passagers. L'air stagnant au niveau du plancher et/ou du plafond est ainsi dé-stratifié, ce qui homogénéise la température interne dans l'ensemble du compartiment et améliore le confort thermique.

Selon des aspects avantageux mais non obligatoires de l'invention, une telle barre de préhension peut incorporer une ou plusieurs des caractéristiques suivantes prises isolément ou selon toute combinaison techniquement admissible :
- au moins l'un des évents comprend des ouvertures, qui sont régulièrement réparties autour de l'axe longitudinal ;
- les portions centrale et d'extrémité sont assemblées les unes aux autres de manière réversible et étanche ;
- la portion centrale et les portions d'extrémité sont assemblées les unes aux autres, les portions de la surface externe du corps correspondant respectivement à la portion centrale et à chacune des portions d'extrémité étant affleurantes ;
- la portion centrale présente un renflement, dans lequel est logé l'organe moteur de ventilation ;
- la barre de préhension comprend un bouchon inférieur, qui obture le conduit de ventilation entre l'évent associé à la portion d'extrémité destinée à être fixée au voisinage du plancher et une zone de fixation de ladite portion d'extrémité au plancher, et/ou un bouchon supérieur, qui obture le conduit de ventilation entre l'évent associé à la portion d'extrémité destinée à être fixée au voisinage du plafond et une zone de fixation de ladite portion d'extrémité au plafond ;
- le bouchon inférieur présente une face interne, qui est orientée vers le conduit de ventilation et qui présente une forme de révolution autour de l'axe longitudinal, la forme de la face interne du bouchon inférieur étant divergente à mesure que l'on se rapproche de la zone de fixation au plancher, et
- le bouchon supérieur présente une face interne, qui est orientée vers le conduit de ventilation et qui présente une forme de révolution autour de l'axe longitudinal, la forme de la face interne du bouchon supérieur étant divergente à mesure que l'on se rapproche de la zone de fixation au plafond.

L'invention concerne aussi une caisse de véhicule de transport de passagers, notamment de véhicule ferroviaire, la caisse comprenant un plancher et un plafond, qui délimitent un compartiment d'accueil des passagers, et une barre de préhension telle que décrit précédemment. Les deux portions d'extrémité du corps de la barre de préhension sont fixées à la caisse respectivement au voisinage du plafond et au voisinage plancher, alors que les deux évents sont ménagés au travers de la paroi du corps, respectivement au voisinage du plancher et au voisinage du plafond, et que la surface externe du corps est configurée pour être saisie par les passagers.

L'invention concerne enfin un véhicule, notamment ferroviaire, qui comprend une caisse de véhicule telle que décrite précédemment.

L'invention sera mieux comprise, et d'autres avantages de celle-ci apparaîtront plus clairement à la lumière de la description qui va suivre, d'un mode de réalisation d'une barre de préhension, d'une caisse de véhicule et d'un véhicule conformes à son principe, donnée uniquement à titre d'exemple et faite en référence aux dessins annexés, dans lesquels :
- [Fig 1] la figure 1 est une vue schématique d'un écorché d'un véhicule conforme à l'invention comprenant une barre de préhension conforme à l'invention, et
- [Fig 2] la figure 2 est une vue représentant schématiquement, sur des inserts a) et b), deux vues de la barre de préhension de la figure 1.

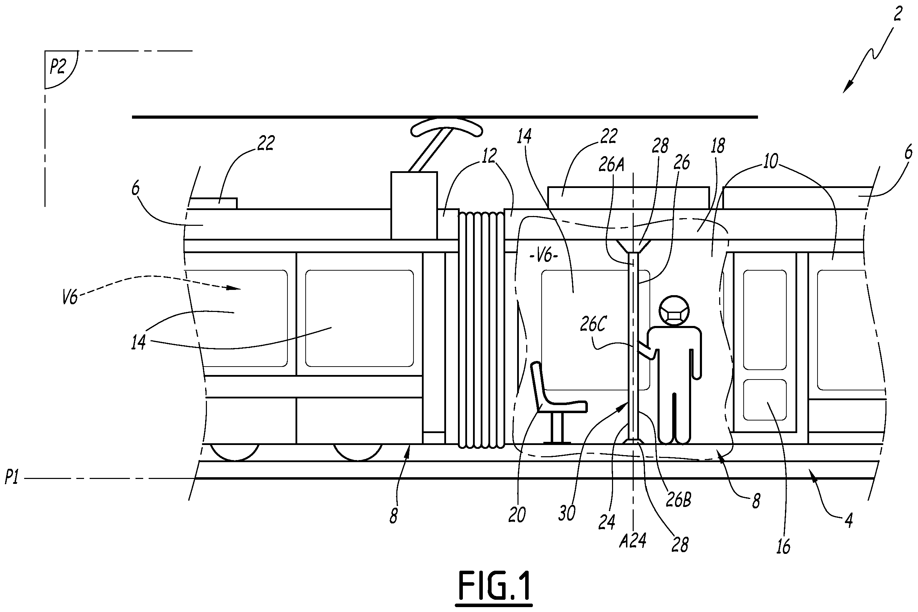

Un véhicule 2 de transport de passagers est représenté sur la figure 1. Le véhicule 2 est ici un véhicule ferroviaire circulant sur des rails 4 d'une installation ferroviaire. Le véhicule 2 est, par exemple, un métro, un train ou un tramway.

Dans l'exemple illustré, les rails 4 sont supposés être rectilignes et parallèles entre eux, définissant une direction longitudinale des rails 4, qui est aussi une direction de déplacement du véhicule 2. Les rails 4 sont supposés être ici horizontaux et définissent un plan horizontal P1. Par commodité, on définit un plan longitudinal P2 du véhicule 2 comme étant un plan vertical et parallèle à la direction longitudinale des rails 4.

Le véhicule 2 est ici un tramway, composé de plusieurs caisses 6 liées les unes aux autres. Deux caisses 6 sont partiellement représentées sur la figure 1. En variante le véhicule 2 ne comprend qu'une seule caisse 6, ou bien trois caisses ou plus.

Chaque caisse 6 comprend un plancher 8, deux parois latérales 10 et un toit 12. Le plancher 8, essentiellement plat, est ici horizontal car les rails 4 sont horizontaux. Les parois latérales 10 sont disposées en regard l'une de l'autre parallèlement au plan P2 et présentent des ouvertures, telles que des fenêtres 14 ou des portes 16. Le toit 12, essentiellement plat, est parallèle au plancher 8 et relie les parois latérales 10 en partie supérieure de chaque caisse 6. Pour chaque caisse, le plancher 8, les parois latérales 10 et le toit 12 délimitent ensemble un compartiment V6 d'accueil des passagers séparé de l'extérieur des caisses 6. Le toit 12 de la caisse 6 est ainsi un plafond 18 pour le compartiment V6 où sont accueillis les passagers.

Celle des deux caisses 6 située sur la droite de la figure 1 est représentée partiellement écorchée. Des sièges 20 sont disposés à l'intérieur du compartiment V6 à l'intention des voyageurs, les sièges 20 étant généralement fixés au plancher 8 et/ou aux parois latérales 10. Un seul siège 20 est représenté sur la figure 1. Certains voyageurs étant parfois debout, des barres de préhension, également appelées mains courantes sont généralement disposées au sein du compartiment V6 pour permettre aux voyageurs de se tenir, notamment pendant les phases d'accélération ou de freinage du véhicule 6. Par main courante, on désigne un dispositif relié à la caisse 6, configuré pour être saisi par les voyageurs.

Pour le confort des voyageurs, l'air du compartiment V6 est généralement climatisé, c'est à dire réchauffé lorsque l'air extérieur est trop froid, par exemple en hiver, et refroidi lorsque l'air extérieur est trop chaud, par exemple en été. Le véhicule 2 comprend à cet effet un climatiseur 22, disposé ici sur le toit 12.

La caisse 6 est équipée d'une barre de préhension 24, qui est disposé au sein du compartiment V6. La barre de préhension 24 joue le rôle de dispositif de ventilation et comprend un corps 26 de forme allongée, qui définit axe longitudinal A24 de la barre 24 et qui présente deux portions d'extrémité opposées, notées 26A et 26B, et une portion centrale 26C située entre les deux portions d'extrémité 26A et 26B.

Les deux portions d'extrémité 26A et 26B sont fixées à la caisse 6 du véhicule 2, la portion d'extrémité 26A étant fixée au voisinage du plafond 18, tandis que la portion d'extrémité 26B est fixée au voisinage du plancher 8. La portion d'extrémité 26A est donc une extrémité haute du corps 26, située du côté du plafond 18, tandis que la portion d'extrémité 26B est une extrémité basse du corps 26, située du côté du plancher 8.

Par « au voisinage », on entend qu'une distance entre l'extrémité 26A et le plafond 18 et une distance entre l'extrémité basse 26B et le plancher 8 sont chacune inférieures à 20%, de préférence à 10% d'une hauteur du compartiment V6, c'est-à-dire d'une distance entre le plafond 18 et le plancher 8, mesurée perpendiculairement au plancher 8.

Les passagers peuvent ainsi se tenir au corps 26 de la barre 24, notamment se tenir à la portion centrale 26C de la barre 24.

Dans l'exemple illustré, les deux portions d'extrémité 26A et 26B sont fixées respectivement au plafond 18 et au plancher 8, par l'intermédiaire de fixations 28.

D'autres configurations sont bien entendu possibles. Par exemple, selon une variante non représentée, une des deux portions d'extrémité 26A ou 26B est fixée à une paroi latérale 10 de la caisse 6.

Dans l'exemple, les fixations 28 ont une forme tronconique alignée sur l'axe longitudinal A24 et s'étendent au sein du compartiment V6, chaque fixation 28 dépassant du plancher 8 ou du plafond 18 auquel cette fixation 28 est fixée. En variante les fixations 28 sont intégrées au plafond 18 et au plancher 8.

Dans l'exemple illustré, l'axe longitudinal A24 est orthogonal au plancher 8. Autrement dit la barre 24 est verticale lorsque la caisse 6 est horizontale.

Le corps 26 présente une face externe 30, qui est configurée pour être saisie par les passagers, qui peuvent ainsi se tenir à la barre 24 au cours des phases d'accélération ou de décélération du véhicule 2. La barre 24 a ainsi une double fonction, à savoir une fonction ventilation et une fonction main courante traditionnelle, et ne réduit pas, au sein du compartiment V6, l'espace disponible pour les passagers.

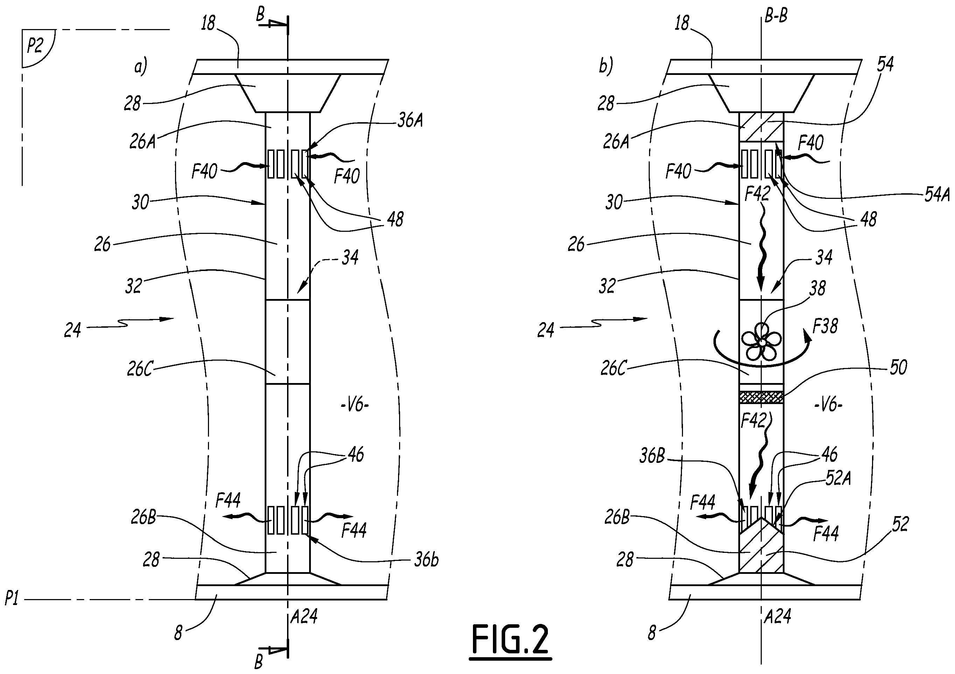

On décrit à présent la structure de la barre 24 à l'aide de la figure 2. Sur l'insert a) de la figure 2, la barre 24 est représentée en vue extérieure, tandis que sur l'insert b), la barre 24 est représentée en coupe suivant un plan B-B sur l'insert a), le plan de coupe B-B passant par l'axe longitudinal A24.

Le corps 26 comprend une paroi 32, qui délimite un conduit de ventilation 34 qui s'étend de l'extrémité haute 26A jusqu'à l'extrémité basse 26B. La face externe 30 du corps 26 est donc aussi une face externe de la paroi 32, qui présente aussi une face interne opposée de la face externe 30, c'est-à-dire orientée vers le conduit 34. Autrement dit, le corps 26 présente une forme de tube creux.

Le corps 26 présente avantageusement une forme de révolution autour de l'axe longitudinal A24. Le conduit 34 est donc centré sur l'axe longitudinal A24. Dans l'exemple illustré, le corps 26 présente une forme de cylindre de section circulaire et d'axe A24.

Le corps 26 est réalisé en un matériau rigide, par exemple en acier inoxydable, et ne se déforme pas lorsque des passagers s'appuient contre la barre 24. On considère que le corps 26 est indéformable.

Le conduit 34 débouche de la portion d'extrémité 26A, située du côté du plafond 18, par un évent supérieur 36A, qui est situé au voisinage du plafond 18, tandis que le conduit 34 débouche de la portion d'extrémité 26B, située du côté du plancher 8, par un évent inférieur 36B, qui est situé au voisinage du plancher 8. Autrement dit, le conduit 34 débouche de chacune des portions d'extrémité 26A et 26B dans le compartiment V6 par un évent 36A ou 36B respectif. L'air du compartiment V6 peut ainsi circuler dans le conduit 34, en passant par les évents 36A et 36B.

Par « au voisinage », on entend que la distance entre l'évent supérieur 36A et le plafond 18 et la distance entre l'évent inférieur 36B et le plancher 8 sont chacune inférieures à 20%, de préférence à 10% de la hauteur du compartiment V6.

Pour forcer la circulation de l'air dans le conduit 34, la barre 24 comprend un organe moteur 38 de ventilation, qui est représenté par une hélice sur l'insert b) de la figure 2. L'organe moteur 38 est logé dans le conduit 34, au niveau de la portion centrale 26C du corps 26. L'organe moteur 38 est configuré pour déplacer l'air au sein du conduit 34, autrement dit pour aspirer de l'air au niveau de l'un des deux évents 36A ou 36B et souffler cet air au niveau de l'autre évent 36B ou 36A. Le fonctionnement de l'organe moteur 38 est représenté par une flèche F38 en arc de cercle.

L'organe moteur 38 comprend un moteur électrique qui est commandé et/ou alimenté en énergie par des fils électriques, qui sont logés dans le conduit 34 et qui passent ensuite dans le plafond 18 ou dans le plancher 8. Les fils électriques sont ainsi inaccessibles aux passagers. Le moteur et les fils électriques ne sont pas représentés.

Dans l'exemple illustré, l'air du compartiment V6 est aspiré au niveau de l'évent supérieur 36A, le flux d'air aspiré étant représenté par des flèches F40. L'air aspiré circule ensuite au sein du conduit 34, le flux d'air circulant dans le conduit 34 étant représenté par des flèches F42, qui sont ici orientées vers l'évent inférieur 36B. L'air sort ensuite du conduit 34 dans le compartiment V6 par l'évent inférieur 36B. Le flux d'air soufflé par l'évent inférieur 36B est représenté par des flèches F44.

L'évent inférieur 36B situé au voisinage du plancher 8 comprend des ouvertures 46, qui sont ménagées dans la paroi 32 et qui sont avantageusement réparties régulièrement autour de l'axe longitudinal A24, de manière à favoriser l'homogénéisation de l'air dans le compartiment V6 tout autour de la barre 24.

Autrement dit, grâce à la barre de préhension 24, l'air est aspiré au niveau du plafond 18, et soufflé au niveau du plancher 8. Cette situation se retrouve de préférence en hiver, alors que l'air chaud se retrouve au voisinage du plafond 18 et que l'air froid stagne au voisinage du plancher 8.

L'organe moteur 38 est de préférence réversible, sur commande, c'est-à-dire que l'organe moteur 38 est aussi configuré pour aspirer l'air par l'évent inférieur 36B et souffler cet air par l'évent supérieur 36A. Cette configuration est choisie par exemple en été, lorsque l'air du compartiment V6 est refroidi au moyen des climatiseurs 22. Cet air froid, qui tend à stagner au voisinage du plancher 8, est soufflé par l'évent supérieur 36A au niveau du voisinage du plafond 18 pour mieux rafraichir les passagers. La commande de l'organe moteur 38, dans un sens ou dans l'autre, est effectuée par un utilisateur tel que le conducteur du véhicule 2 ou un contrôleur, voire à distance lorsque le véhicule 2 est automatique.

L'évent supérieur 36A, situé au voisinage du plafond 18, comprend des ouvertures 48, qui sont ménagées dans la paroi 32 et qui sont avantageusement réparties régulièrement autour de l'axe longitudinal A24, de manière à favoriser l'homogénéisation de l'air dans le compartiment V6. Les ouvertures 48 sont ici représentées par des trous rectangulaires, disposés dans leur longueur parallèlement à l'axe A24. En variante non représentée, les ouvertures 48 sont des trous oblongs, ou bien encore des rangées de trous circulaires, alignées ou disposés en quinconce. Le ouvertures 48 sont ménagées dans la paroi 32 pour laisser passer l'air sans trop fragiliser le corps 26.

Avantageusement, la barre 24 comprend un filtre 50, disposé à l'intérieur du conduit 34, configuré pour bloquer les poussières entrainées dans l'évent inférieur 36B par l'air aspiré. Le filtre 50 est donc ici un filtre à poussière. Optionnellement, le filtre 50 intègre un dispositif de purification, non représenté, configuré pour tuer les virus et/ou les bactéries contenus dans l'air. Ainsi l'air passant par le conduit 34 est purifié avant d'être réintroduit dans le compartiment V6. Un tel dispositif de purification comprend par exemple une lampe à ultraviolets, ou bien un système de génération d'ozone. En variante le dispositif de purification est distinct du filtre 50, tout en étant logé dans le conduit 34.

Les portions d'extrémité 26A et 26B et la portion centrale 26C sont avantageusement des portions distinctes du corps 26, qui sont assemblées les unes aux autres de manière réversible. L'assemblage des portions d'extrémités 26A et 26B et de la portion centrale 26C se fait par exemple par emmanchement. L'assemblage des portions d'extrémités 26A et 26B et de la portion centrale 26C est étanche, pour éviter les fuites d'air Optionnellement, un dispositif d'étanchéité, tel un joint, est prévu à la jonction entre la portion centrale 26C et chacune des portions d'extrémité 26A ou 26B.

Un dispositif de sécurisation, non représenté, est de préférence prévu pour qu'en configuration assemblée, les portions 26A, 26B et 26C soient fixes les unes par rapport aux autres. Le dispositif de sécurisation est réversible, de manière qu'un opérateur peut, lors d'une opération de maintenance, démonter le corps 26 pour accéder à l'organe moteur 38 situé dans la portion centrale 26C ou pour replacer le filtre 50, s'il est présent.

Lorsque les portions d'extrémité 26A et 26B et centrale 26C sont assemblées les unes aux autres, les portions de la face externe 30 correspondant respectivement aux portions centrale 26C et d'extrémité 26A et 26B sont de préférence affleurantes, pour éviter les risques de blessure des passagers et faciliter le nettoyage.

Avantageusement, la barre de préhension 24 comprend un bouchon inférieur 52, qui obture le conduit 34 entre l'évent inférieur 36B, situé au voisinage du plancher 8, et le plancher 8, c'est-à-dire entre l'évent inférieur 36B et une zone de fixation au plancher 8 de la portion d'extrémité 26B correspondante. Le bouchon 52 force ainsi l'air circulant dans le conduit 34 à sortir par l'évent inférieur 36B et évite les fuites d'air, notamment les infiltrations d'air dans le plancher 8.

Le bouchon inférieur 52 comprend une face interne 52A, qui est orientée vers le conduit 34 et qui présente avantageusement une forme de révolution autour de l'axe longitudinal A24, la forme de la face interne 52A étant divergente à mesure que l'on se rapproche de la zone de fixation au plancher 8. Dans l'exemple, la face interne 52A est conique centrée sur l'axe longitudinal A24. La forme divergente de la face interne 52A permet de rediriger le flux d'air F42 dans le conduit 34 vers le compartiment V6 tout en réduisant les pertes de charges. Autrement dit le bouchon inférieur 52 avec une face interne 52A divergente améliore l'efficacité de ventilation de la barre de préhension 24.

De manière analogue, la barre de préhension 24 comprend avantageusement un bouchon supérieur 54, qui obture le conduit 34 entre l'évent supérieur 36A et le plafond 18, c'est-à-dire entre l'évent supérieur 36A et une zone de fixation au plafond 18 de la portion d'extrémité 26A correspondante. Le bouchon supérieur 54 comprend une face interne 54A, qui est orientée vers le conduit 34. Dans l'exemple illustré, la face interne 54A est plane. En variante non représentée, la face interne 54A présente une forme de révolution autour de l'axe longitudinal A24, la forme de la face interne 54A étant divergente à mesure que l'on se rapproche de la zone de fixation au plancher 8. La forme de la face interne 54A est, par exemple, conique. Le bouchon supérieur 54 avec une face interne 54A divergente améliore l'efficacité de ventilation de la barre de préhension 24 lorsque le fonctionnement de l'organe moteur 38 est inversé, c'est-à-dire lorsque l'air du compartiment V6 est aspiré par l'évent inférieur 36B puis soufflé par l'évent supérieur 36A.

Lorsque des fils électriques alimentant l'organe moteur 38 sont présents, ces fils électriques traversent le bouchon 52 ou 54 correspondant de manière étanche, c'est-à-dire qu'il n'y a pas de fuite d'air au travers des bouchons 52 ou 54.

Dans l'exemple illustré, la portion centrale 26C est cylindrique.

En variante non représentée, la portion centrale 26C présence un renflement intermédiaire, c'est-à-dire que la face externe 30 et le conduit 34 présentent un rayon variable, avec une partie intermédiaire présentant un rayon supérieur au rayon des portions d'extrémités 26A et 26B. Le renflement de la portion centrale 26C est par exemple en forme de tonneau, la portion centrale 26C étant produite par exemple par hydroformage d'un tube. Ainsi la portion du conduit 34 correspondant à cette partie intermédiaire présente un rayon supérieur au reste du conduit 34, ce qui permet de loger un organe moteur 38 plus grand et plus puissant.

Les modes de réalisation et les variantes mentionnées ci-dessus peuvent être combinés entre eux pour générer de nouveaux modes de réalisation de l'invention qui est définie par les revendications annexées.

## Revendications

1. Barre de préhension (24) pour caisse (6) de véhicule (2) de transport de passagers, notamment de véhicule ferroviaire, la barre de préhension comprenant un corps (26) de forme allongée, définissant un axe longitudinal (A24) de la barre de préhension, avec une portion centrale (26C) située entre deux portions d'extrémité (26A, 26B), où le corps comprend une paroi (32) présentant une surface externe (30) et délimitant un conduit de ventilation (34), le conduit de ventilation débouchant de chacune des portions d'extrémité (26A, 26B) par un évent (36A, 36B) respectif, où la barre de préhension est destinée à être disposée au sein d'un compartiment (V6) d'accueil de passagers de la caisse de véhicule, les deux portions d'extrémité étant destinées à être fixées à la caisse (6) respectivement au voisinage d'un plafond (18) et au voisinage d'un plancher (8) de la caisse, la surface externe (30) du corps étant configurée pour être saisie par les passagers,
la barre de préhension étant **caractérisée en ce qu'**elle comprend un organe moteur (38) de ventilation, qui est logé dans le conduit de ventilation au niveau de la portion centrale et qui est configuré pour aspirer de l'air au niveau de l'un des deux évents (36A, 36B) et souffler cet air au niveau de l'autre évent (36A, 36B).

2. Barre de préhension (24) selon la revendication précédente, **caractérisée en ce que** au moins l'un des évents (36A, 36B) comprend des ouvertures (46, 48), qui sont régulièrement réparties autour de l'axe longitudinal (A24).

3. Barre de préhension (24) selon l'une quelconque des revendications précédentes, **caractérisée en ce que** les portions centrale (26C) et d'extrémité (26A, 26B) sont assemblées les unes aux autres de manière réversible et étanche.

4. Barre de préhension (24) selon la revendication précédente, **caractérisée en ce que** lorsque la portion centrale (26C) et les portions d'extrémité (26A, 26B) sont assemblées les unes aux autres, les portions de la surface externe (30) du corps (26) correspondant respectivement à la portion centrale (26C) et à chacune des portions d'extrémité (26A, 26B) étant affleurantes.

5. Barre de préhension (24) selon l'une quelconque des revendications précédentes, **caractérisée en ce que** la portion centrale (26C) présente un renflement, dans lequel est logé l'organe moteur (38) de ventilation.

6. Barre de préhension (24) selon l'une quelconque des revendications précédentes, **caractérisée en ce qu'**elle comprend un bouchon inférieur (52), qui obture le conduit de ventilation (34) entre l'évent (36B) associé à la portion d'extrémité (26B) destinée à être fixée au voisinage du plancher (8) et une zone de fixation de ladite portion d'extrémité au plancher, et/ou un bouchon supérieur (54), qui obture le conduit de ventilation (34) entre l'évent (36A) associé à la portion d'extrémité (26A) destinée à être fixée au voisinage du plafond (8) et une zone de fixation de ladite portion d'extrémité au plafond.

7. Barre de préhension (24) selon la revendication précédente, **caractérisée en ce que** le bouchon inférieur (52) présente une face interne (52A), qui est orientée vers le conduit de ventilation (34) et qui présente une forme de révolution autour de l'axe longitudinal (A24), la forme de la face interne (52A) du bouchon inférieur étant divergente à mesure que l'on se rapproche de la zone de fixation au plancher (8).

8. Barre de préhension (24) selon l'une quelconque des revendications 6 ou 7, **caractérisée en ce que** le bouchon supérieur (54) présente une face interne (54A), qui est orientée vers le conduit de ventilation (34) et qui présente une forme de révolution autour de l'axe longitudinal (A24), la forme de la face interne (54A) du bouchon supérieur étant divergente à mesure que l'on se rapproche de la zone de fixation au plafond (18).

9. Caisse (6) de véhicule (2) de transport de passagers, notamment de véhicule ferroviaire, la caisse comprenant :
- un plancher (8) et un plafond (18) délimitant un compartiment (V6) d'accueil des passagers,
- une barre de préhension (24), selon l'une quelconque des revendications 1 à 8, les deux portions d'extrémité (26A, 26B) du corps (26) de la barre de préhension étant fixées à la caisse (6) respectivement au voisinage du plafond (18) et au voisinage du plancher (8), alors que les deux évents (36A, 36B) sont ménagés au travers de la paroi (32) du corps respectivement au voisinage du plancher et au voisinage du plafond et que la surface externe (30) du corps est configurée pour être saisie par les passagers.

10. Véhicule (2) de transport de passagers, notamment ferroviaire, comprenant une caisse (6) selon la revendication 9.

## Patentansprüche

1. Greifstange (24) für Wagenkasten (6) eines Fahrzeugs (2) zur Beförderung von Passagieren, insbesondere eines Schienenfahrzeugs, die Greifstange umfassend einen Körper (26) länglicher Form, der eine Längsachse (A24) der Greifstange definiert, mit einem mittleren Abschnitt (26C), der sich zwischen zwei Endabschnitten (26A, 26B) befindet, wobei der Körper eine Wand (32) umfasst, die eine Außenfläche (30) aufweist und einen Lüftungskanal (34) begrenzt, wobei der Lüftungskanal aus jedem der Endabschnitte (26A, 26B) durch eine jeweilige Lüftungsöffnung (36A, 36B) mündet, wobei die Greifstange dazu bestimmt ist, innerhalb eines Abteils (V6) zum Aufnehmen von Passagieren des Wagenkastens des Fahrzeugs angeordnet ist, wobei die zwei Endabschnitte dazu bestimmt sind, an dem Wagenkasten (6) jeweils in der Nähe einer Decke (18) und in der Nähe eines Bodens (8) des Wagenkastens befestigt zu werden, wobei die Außenfläche (30) des Körpers konfiguriert ist, um von den Passagieren ergriffen zu werden, wobei die Greifstange **dadurch gekennzeichnet ist, dass** sie ein Antriebselement (38) zur Lüftung umfasst, das an dem mittleren Abschnitt in dem Lüftungskanal untergebracht ist und konfiguriert ist, um Luft an einer der zwei Lüftungsöffnungen (36A, 36B) anzusaugen und diese Luft auf Höhe der anderen Lüftungsöffnung (36A, 36B) auszublasen.

2. Greifstange (24) nach dem vorherigen Anspruch, **dadurch gekennzeichnet, dass** mindestens eine der Lüftungen (36A, 36B) Öffnungen (46, 48) umfasst, die gleichmäßig um die Längsachse (A24) verteilt sind.

3. Greifstange (24) nach einem der vorherigen Ansprüche, **dadurch gekennzeichnet, dass** der mittlere Abschnitt (26C) und die Endabschnitte (26A, 26B) lösbar und dicht miteinander verbunden sind.

4. Greifstange (24) nach dem vorherigen Anspruch, **dadurch gekennzeichnet, dass**, wenn der mittlere Abschnitt (26C) und die Endabschnitte (26A, 26B) miteinander verbunden sind, die Abschnitte der Außenfläche (30) des Körpers (26), die jeweils dem mittleren Abschnitt (26C) und jedem der Endabschnitte (26A, 26B) entsprechen, bündig sind.

5. Greifstange (24) nach einem der vorherigen Ansprüche, **dadurch gekennzeichnet, dass** der mittlere Abschnitt (26C) eine Ausbuchtung aufweist, in der das Antriebselement (38) zur Lüftung untergebracht ist.

6. Greifstange (24) nach einem der vorherigen Ansprüche, **dadurch gekennzeichnet, dass** sie einen unteren Stopfen (52) umfasst, der den Lüftungskanal (34) zwischen der Lüftungsöffnung (36B), die mit dem Endabschnitt (26B) assoziiert ist, der dazu bestimmt ist, in der Nähe des Bodens (8) befestigt zu werden, und einem Bereich zur Befestigung des Endabschnitts an dem Boden verschließt, und/oder einen oberen Stopfen (54), der den Lüftungskanal (34) zwischen der Lüftungsöffnung (36A), die mit dem Endabschnitt (26A) assoziiert ist, der dazu bestimmt ist, in der Nähe der Decke (8) befestigt zu werden, und einem Bereich, in dem der Endabschnitt an der Decke befestigt ist, verschließt.

7. Greifstange (24) nach dem vorherigen Anspruch, **dadurch gekennzeichnet, dass** der untere Stopfen (52) eine Innenfläche (52A) aufweist, die dem Lüftungskanal (34) zugewandt ist und eine Drehform um die Längsachse (A24) aufweist, wobei die Form der Innenfläche (52A) des unteren Stopfens mit zunehmender Annäherung an den Bereich der Bodenbefestigung (8) divergierend ist.

8. Greifstange (24) nach einem der Ansprüche 6 oder 7, **dadurch gekennzeichnet, dass** der obere Stopfen (54) eine Innenseite (54A) aufweist, die dem Lüftungskanal (34) zugewandt ist, und die eine Drehform um die Längsachse (A24) aufweist, wobei die Form der Innenseite (54A) des oberen Stopfens mit zunehmender Nähe zum Befestigungsbereich an Decke (18) divergiert.

9. Wagenkasten (6) eines Fahrzeugs (2) zur Beförderung von Passagieren, insbesondere eines Schienenfahrzeug, der Wagenkasten umfassend:
- einen Boden (8) und eine Decke (18), die ein Abteil (V6) zum Aufnehmen von Passagieren abgrenzen,
- eine Greifstange (24), nach einem der Ansprüche 1 bis 8, wobei die zwei Endabschnitte (26A, 26B) des Körpers (26) der Greifstange jeweils in der Nähe der Decke (18) und in der Nähe des Bodens (8) an dem Wagenkasten (6) befestigt sind, während die beiden Lüftungsöffnungen (36A, 36B) durch die Wand (32) des Körpers jeweils in der Nähe des Bodens und in der Nähe der Decke ausgebildet sind und die Außenfläche (30) des Körpers konfiguriert ist, um von den Passagieren ergriffen zu werden.

10. Fahrzeug (2) zur Beförderung von Passagieren, insbesondere Eisenbahnfahrzeug, umfassend einen Wagenkasten (6) nach Anspruch 9.

## Claims

1. A gripping bar (24) for the body (6) of a passenger transport vehicle (2), in particular a rail vehicle, the gripping bar comprising a body (26) of elongate shape defining a longitudinal axis (A24) of the gripping bar, with a central portion (26C) situated between two end portions (26A, 26B), wherein the body comprises a wall (32) having an outer surface (30) and delimiting a ventilation duct (34), the ventilation duct opening out from each of the end portions (26A, 26B) through a respective vent (36A, 36B), wherein the gripping bar is intended to be disposed within a passenger compartment (V6) of the vehicle body, the two end portions being intended to be secured to the body (6) respectively in the vicinity of a ceiling (18) and in the vicinity of a floor (8) of the body, the outer surface (30) of the body being configured so as to be gripped by the passengers, the gripping bar being **characterised in that** it comprises a motorised ventilation member (38), which is housed in the ventilation duct at the central portion and which is configured to suck in air at one of the two vents (36A, 36B) and blow this air out the other vent (36A, 36B).

2. The gripping bar (24) according to the preceding claim, **characterised in that** at least one of the vents (36A, 36B) comprises openings (46, 48) which are evenly distributed around the longitudinal axis (A24).

3. The gripping bar (24) according to any one of the preceding claims, **characterised in that** the central (26C) and end (26A, 26B) portions are assembled together in a reversible and sealed manner.

4. The gripping bar (24) according to the preceding claim, **characterised in that** when the central portion (26C) and the end portions (26A, 26B) are assembled to each other, the portions of the outer surface (30) of the body (26) corresponding respectively to the central portion (26C) and to each of the end portions (26A, 26B) being flush.

5. The gripping bar (24) according to any one of the preceding claims, **characterised in that** the central portion (26C) has a bulge in which the motorised ventilation member (38) is housed.

6. The gripping bar (24) according to any one of the preceding claims, **characterised in that** it comprises a lower plug (52), which closes off the ventilation duct (34) between the vent (36B) associated with the end portion (26B) intended to be secured in the vicinity of the floor (8) and a zone for securing said end portion to the floor, and/or an upper plug (54), which closes off the ventilation duct (34) between the vent (36A) associated with the end portion (26A) intended to be secured in the vicinity of the ceiling (8) and a zone for securing said end portion to the ceiling.

7. The gripping bar (24) according to the preceding claim, **characterised in that** the lower plug (52) has an internal face (52A) which is oriented towards the ventilation duct (34) and which has a shape of revolution about the longitudinal axis (A24), the shape of the internal face (52A) of the lower plug diverging as one approaches the zone for securing to the floor (8).

8. The gripping bar (24) according to any one of claims 6 or 7, **characterised in that** the upper plug (54) has an internal face (54A) which is oriented towards the ventilation duct (34) and which has a shape of revolution about the longitudinal axis (A24), the shape of the internal face (54A) of the upper plug diverging as one approaches the zone for securing to the ceiling (18).

9. A body (6) for a passenger transport vehicle (2), in particular a rail vehicle, the body comprising-:
- a floor (8) and a ceiling (18) defining a passenger compartment (V6),
- a gripping bar (24), according to any one of claims 1 to 8, the two end portions (26A, 26B) of the body (26) of the gripping bar being secured to the body (6) respectively in the vicinity of the ceiling (18) and in the vicinity of the floor (8), while the two vents (36A, 36B) are formed through the wall (32) of the body respectively in the vicinity of the floor and in the vicinity of the ceiling and the outer surface (30) of the body is configured to be gripped by the passengers.

10. A passenger transport vehicle (2), in particular a rail vehicle, comprising a body (6) according to claim 9.
